# EUROPEAN PATENT APPLICATION

(11) **EP 2 369 779 A1**
(43) Date of publication of application: **28.09.2011**
(21) Application number: 09832859.4
(22) Date of filing: 13.08.2009
(51) Int. Cl.: H04L 9/32

(54) **METHOD, SYSTEM, AND APPARATUS FOR CONTROLLING RESOURCE DISTRIBUTION IN PEER P2P NETWORK**

(30) Priority: 18.12.2008 CN 200810183550
(71) Applicant: Huawei Technologies Co., Ltd., Shenzhen, Guangdong 518129 (CN)
(72) Inventor: SONG, Haibin, Shenzhen Guangdong 518129 (CN); JIANG, Haifeng, Shenzhen Guangdong 518129 (CN); JIANG, Xingfeng, Shenzhen Guangdong 518129 (CN)
(74) Representative: Körber, Martin Hans
(86) International application number: PCT/CN2009/073234
(87) International publication number: WO 2010/069177

(57) **Abstract**

A method, a system, and a device for controlling resource putting in a Peer-to-Peer (P2P) network are provided. The P2P network includes credible peers. The method includes: getting authority information and/or reputation information of a client from the P2P network; and controlling activities of resource putting performed by the client according to the authority information and/or the reputation information. Resources put by a client are examined at an access peer to prevent malicious activities performed by the client. The access peer further puts relevant information of the client in an overlay network. When a client is handed over to a new peer, a new access peer gets authority information of the client from the overlay network, and examines and controls putting and getting of resources performed by the access client.

## Description

This application claims priority to Chinese Patent Application No. 200810183550.6, filed with the Chinese Patent Office on December 18, 2008 and entitled "METHOD, SYSTEM, AND DEVICE FOR CONTROLLING RESOURCE PUTTING IN P2P NETWORK", which is incorporated herein by reference in its entirety.

### FIELD OF THE INVENTION

The present invention relates to the field of communications technologies, and in particular, to a method, a system, and a device for controlling resource putting in a Peer-to-Peer (P2P) network.

### BACKGROUND OF THE INVENTION

A P2P network is formed of multiple peers joining the network, and is also referred to as a P2P overlay network. In the P2P network, two or more Personal Computers (PCs) or other devices directly communicate or cooperate with each other over the network, and mutually share shared resources including processing capabilities, programs, and data. No central peer or central server exists in the P2P network, and each peer plays roles of an information consumer, an information provider, and an information agent at the same time. In the P2P network, all of the peers are completely equal, and rights and obligations are reciprocal.

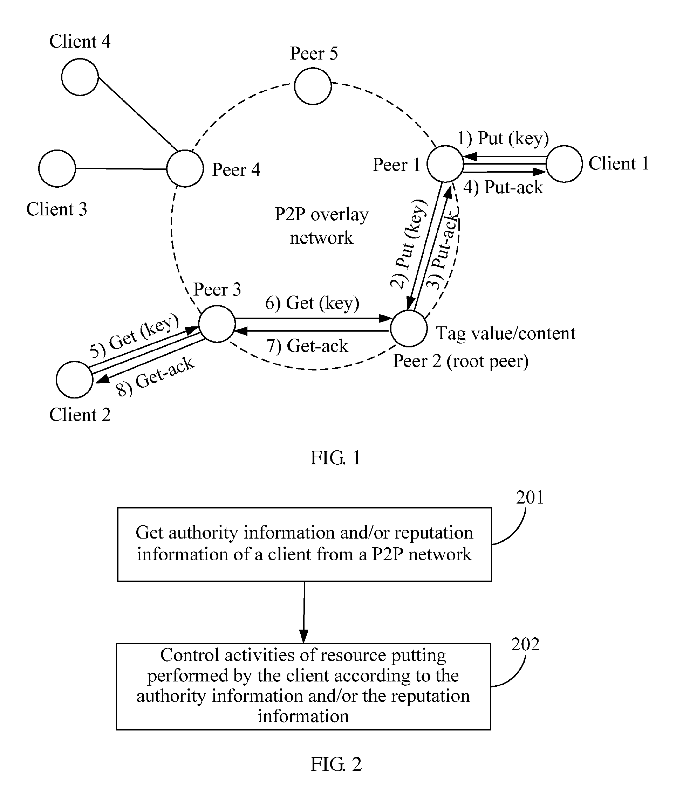

FIG. 1 is a schematic diagram of a P2P overlay network of a peer-client structure in the prior art. As shown in FIG. 1, the P2P overlay network adds a virtual network layer over one or more existing networks to realize a specific function. All peers form the P2P overlay network. Clients hang under the peers, can only support putting and searching for content, and do not participate in routing or searching of the P2P overlay network. A client may put content (Key/Value) in the P2P overlay network through a Put command. The Key is a tag value of content in the P2P network. A root peer in charge of the Key is found in the P2P network according to the Key, and the Key and the content corresponding to the Key are stored in the root peer corresponding to the Key. Through one Key, only one root peer may be found. A Value is content corresponding to a Key, and generally a Key and content corresponding to the Key are marked as a Key/Value pair.

When a Client 1 is required to put a Key/Value resource in a network, a Peer 1 connected to the Client 1 finds a root peer Peer 2 in dedicated charge of storing the Key/Value according to a specific P2P rule, for example, a Distributed Hash Table (DHT) algorithm including Chord and Pastry, and sends the Key/Value to the Peer 2. The Peer 2 saves the Key/Value pair, in which the Key/Value pair records a Value corresponding to each Key, the Value is generally content corresponding to the Key, and the content may be real content, or a source address capable of providing the content. When a Client 2 requires the same content (Key), a Peer 3 connected to the Client 2 may initiate a Get command to the P2P overlay network to find a Value corresponding to the Key. The Peer 3 finds the root peer Peer 2 in dedicated charge of storing the Key/Value according to the specific P2P rule. Finally, the Peer 2 returns the Value corresponding to the Key through the peer 3, that is, the content put by the Client 1, or returns to the Client 2 an address of the Client 1 capable of providing the content.

During the implementation of the present invention, the inventors find that the prior art at least has the following problems.

In a P2P environment, a client has authority of putting resources. However, hot content exists in a network, such as an index of a hot movie, the content exists in the form of a Key/Value pair, a Key uniquely identifies movie content, and a Value is an address of the move content. A malicious client may set an address of an object of attack as a Value, and put the Value together with a Key corresponding to hot content into a P2P overlay network, thereby incurring a large quantity of peers intending to obtain the hot content, which from different places establish connections to the object of attack, so that network resources of the object of attack are extremely occupied, and the object of attack even breaks down, which results in a Distributed Denial of Service (DDOS) attack on the object of attack.

### SUMMARY OF THE INVENTION

Embodiments of the present invention provide a method, a system, and a device for controlling resource putting in a P2P network, so as to prevent malicious activities of a client.

To achieve the objective, an embodiment of the present invention provides a method for controlling resource putting in a P2P network, where the P2P network is formed of credible peers, and the method includes:
getting authority information and/or reputation information of a client from the P2P network; and
controlling activities of resource putting performed by the client according to the authority information and/or the reputation information.

An embodiment of the present invention provides a system for controlling resource putting in a P2P network, where P2P peers forming the P2P network are credible peers, and the system includes:
a client, configured to send a request message for putting resource information to a P2P peer; and
the P2P peer, configured to get authority information and/or reputation information of the client from the P2P network, receive the request message for putting the resource information of the client, and control activities of resource putting performed by the client according to the authority information and/or the reputation information when a contact address of the resource information is a contact address of the client.

An embodiment of the present invention provides a P2P peer, where the P2P peer includes:
an authority getting unit, configured to get authority information and/or reputation information of a new access client from a P2P network when the client newly accesses the network; and
a control unit, configured to control activities of resource putting performed by the new access client according to the authority information and/or the reputation information.

Compared with the prior art, the embodiments of the present invention have at least the following advantages.

In the embodiments of the present invention, activities of resource putting performed by a client are examined at an access peer, authority information and/or reputation information of the client is determined accordingly, and the authority information and/or the reputation information of the relevant client are put into an overlay network. When a client is handed over to a new peer, the new access peer node gets the authority information of the client from the overlay network, and examines and controls activities of putting and getting resources performed by the access client. Therefore, malicious activities of the client are prevented.

### BRIEF DESCRIPTION OF THE DRAWINGS

To illustrate the technical solutions according to the embodiments of the present invention or in the prior art more clearly, the accompanying drawings for describing the embodiments or the prior art are introduced briefly in the following. Apparently, the accompanying drawings in the following description are only some embodiments of the present invention, and persons of ordinary skill in the art can derive other drawings from the accompanying drawings without creative efforts.
FIG. 1 is a schematic diagram of a P2P overlay network of a peer-client structure in the prior art;
FIG. 2 is a flow chart of a method for controlling resource putting in a P2P network according to an embodiment of the present invention;
FIG. 3 is an architecture diagram of a P2P overlay network formed of credible devices according to an embodiment of the present invention;
FIG. 4 is a schematic diagram of a Bob peer putting a Key/Value resource into an overlay network through an access peer node according to an embodiment of the present invention;
FIG. 5 is a schematic diagram of an access peer node putting corresponding information into a P2P overlay network when finding malicious activities performed by a client according to an embodiment of the present invention;
FIG. 6 is a schematic control diagram when a client moves to another peer according to an embodiment of the present invention; and
FIG. 7 is a schematic structural diagram of a P2P peer according to an embodiment of the present invention.

### DETAILED DESCRIPTION OF THE EMBODIMENTS

The technical solution of the present invention will be clearly described in the following with reference to the accompanying drawings. Apparently, the embodiments to be described are only a part rather than all of the embodiments of the present invention. All other embodiments obtained by persons of ordinary skill in the art based on the embodiments of the present invention without creative efforts shall fall within the protection scope of the present invention.

An embodiment of the present invention provides a method for controlling resource putting in a P2P network, as shown in FIG. 2. The P2P network is formed of credible peers, and the method includes the following steps.

Step 201: Get authority information and/or reputation information of a client from the P2P network.

Step 202: Control activities of resource putting performed by the client according to the authority information and/or the reputation information.

Before the activities of resource putting performed by the client are controlled according to the authority information and/or the reputation information in step 202, the method further includes a step of controlling the activities of resource putting performed by the client according to a contact address, and the step includes:
receiving a request message for putting resource information of the client; and
when it is determined that a contact address of the resource information is not a contact address of the client, discarding the request message.

The discarding the request message further includes a step of updating the authority information and/or the reputation information of the client according to the discarding of the request message, and the step includes:
determining the activities of putting performed by the client to be malicious when it is determined that the contact address of the resource information is not the contact address of the client, decreasing a reputation value of the client, and setting the authority information of the client as disable, which refers to that the client is prohibited from putting resources in the P2P network, when the reputation value of the client is lower than a preset threshold.

After the authority information of the client concerning the resource putting is set as disable, the method further includes:
if the client does not perform any activity of malicious putting anymore within preset time, increasing the reputation value of the client; and when the reputation value satisfies a condition of restoring putting authority, setting the authority information of the client as enable, which refers to that the client is allowed to put resources in the P2P network.

After the authority information of the client concerning the resource putting is set as disable, the method includes:
putting the updated authority information and/or reputation information of the client into the P2P network.

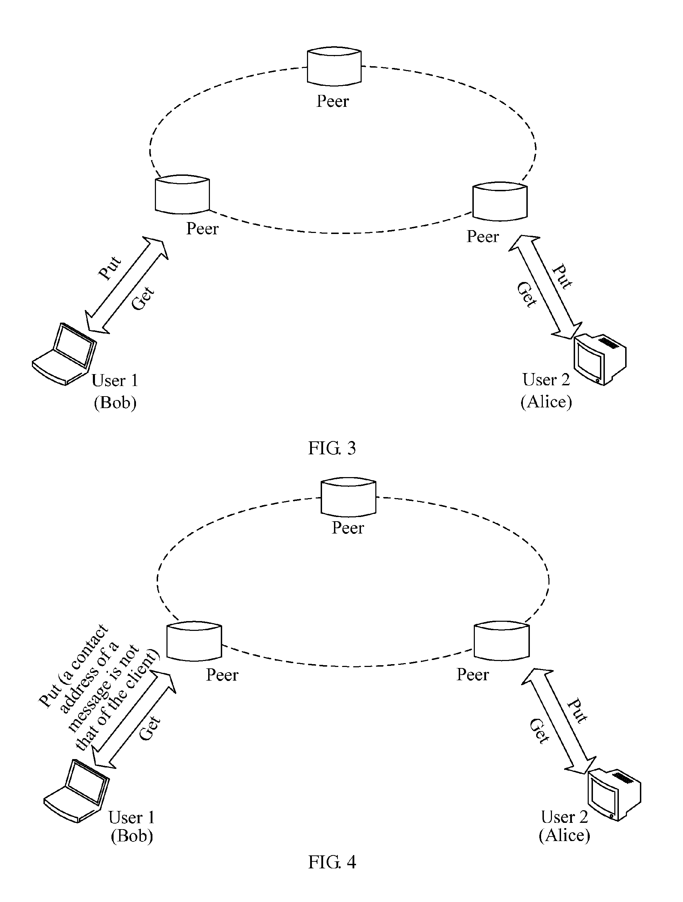

In an embodiment of the present invention, as shown in FIG. 3, a P2P overlay network is formed of credible devices. For example, devices provided by an operator are used as peers to form a P2P network, and a user acts as a client to provide resources or get resources from the overlay network. A user owns a unique identifier (ID). For example, a user 1 (Bob) and a user 2 (Alice) act as clients, and access the P2P overlay network to obtain services respectively through a corresponding peer.

As shown in FIG. 4, a Bob peer puts a Key/Value resource into the overlay network through an access peer. For security reasons, the network only allows a contact address of a resource put by a peer to be a contact address of the peer, so that the access peer of Bob examines a Put message put by Bob. When it is found that a contact address of the resource to be put is not an address of Bob, the message is discarded, and failure information is returned; and when it is found that the contact address of the resource to be put is the address of Bob, the message is put into the overlay network.

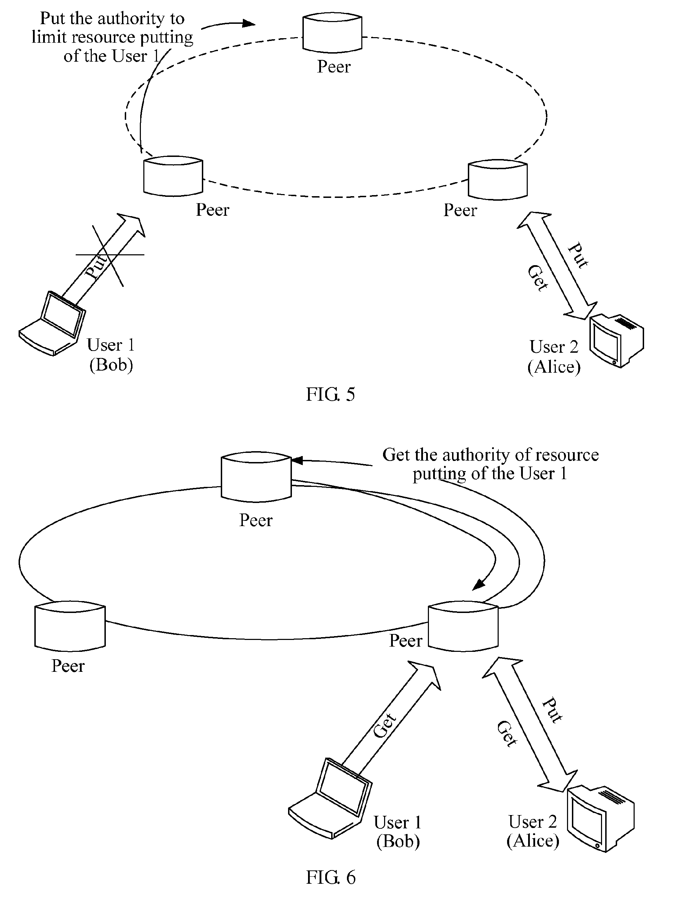

As shown in FIG. 5, when a client is found to be performing malicious activities, an access peer node puts corresponding information into the P2P overlay network. For example, when the access peer of Bob finds that Bob performs a DDOS attack by putting an address of others, the access peer decides to limit authority of Bob for putting resources (authority information of Bob is set as disable to prohibit Bob from putting resources); or the access peer may only adjust reputation of Bob instead of immediately limiting the authority of Bob to put resources and exert limitation only when the reputation decreases to a value which is decided in combination with historical reputation information of Bob, but it is required to put information of Bob performing the DDOS attack and the reputation information of Bob into the overlay network. When the access peer of Bob decides to limit the authority of Bob to put resources, the access peer of Bob lists Bob into a blacklist, prohibits Bob from continuing to put resources into the overlay network, and discards a subsequent message of Bob for requesting to put resources.

As shown in FIG. 6, when Bob moves to another site, and arrives at a peer of Alice, and when Bob accesses the peer, the peer gets the reputation information of Bob and corresponding information of putting authority of Bob. When finding that the authority information prohibits Bob from putting resources, the peer continues to manage the putting authority of Bob until the putting authority of Bob is restored.

An embodiment of the present invention provides a system for controlling resource putting in a P2P network. P2P peers forming the P2P network are credible peers, and the system includes a client and the P2P peer. The client is configured to send a request message for putting resource information to the P2P peer. The P2P peer is configured to get authority information and/or reputation information of the client from the P2P network, receive the request message for putting the resource information of the client, and control activities of resource putting performed by the client according to the authority information and/or the reputation information when a contact address of the resource information is a contact address of the client.

The P2P peer is further configured to discard the request message of the client when determining that the contact address of the resource information is not the contact address of the client.

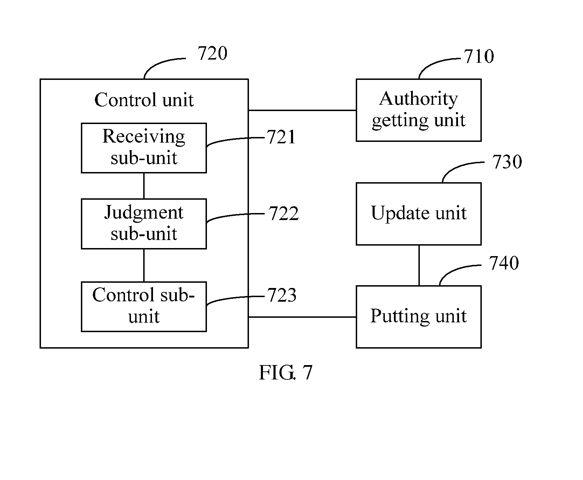

An embodiment of the present invention provides a P2P peer. As shown in FIG. 7, the P2P peer includes: an authority getting unit 710, configured to get authority information and/or reputation information of a new access client from a P2P network when the client newly accesses the network; and a control unit 720, configured to control activities of resource putting performed by the new access client according to the authority information and/or the reputation information.

The control unit 720 includes:
a receiving sub-unit 721, configured to receive a request message for putting resource information of the client;
a judgment sub-unit 722, configured to judge whether a contact address of the resource information put by the client is a contact address of the client; and
a control sub-unit 723, configured to discard the request message of the client and limit authority of the client for putting the resource information when the judgment sub-unit 722 determines that the contact address of the resource information is not the contact address of the client.

The P2P peer further includes:
an update unit 730, configured to update the authority information and/or the reputation information of the client.

The update unit 730 is specifically configured to determine that the activities of putting performed by the client are malicious when the contact address of the resource information is determined not to be the contact address of the client, decrease a reputation value of the client, and set the authority information of the client of putting resource information as disable when the reputation value of the client is lower than a preset threshold; and
to increase the reputation value of the client if the client does not perform any activity of malicious putting within preset time, and set the authority information of the client of putting resource information as enable when the reputation value satisfies a condition of restoring putting authority.

The P2P peer further includes:
a putting unit 740, configured to put the authority information and/or the reputation information updated by the update unit 730 into the P2P network.

In the embodiments of the present invention, the activities of resource putting performed by the client are examined at the access peer, the authority information and/or the reputation information of the client are determined accordingly, and the authority information and/or the reputation information of the relevant client are put into the overlay network. When the client node is handed over to a new peer, the new access peer gets the authority information of the client from the overlay network, and examines and controls the activities of putting and getting resources performed by the access client. Therefore, malicious activities of the client are prevented.

Through the above description of the implementation, it is clear to persons skilled in the art that the present invention may be accomplished through hardware, or through software plus a necessary universal hardware platform. Based on this, the technical solutions of the present invention may be embodied in the form of a software product. The software product may be stored in one nonvolatile storage medium (for example, CD-ROM, USB flash drive, or removable hard disk) and include several instructions used to instruct a computer device (for example, a PC, a server, or a network device) to perform the method according to the embodiments of the present invention.

The above descriptions are merely exemplary embodiments of the present invention. It should be noted by persons of ordinary skill in the art that, various modifications and improvements may be made without departing from the principle of the present invention, which should be construed as falling within the protection scope of the present invention.

## Claims

1. A method for controlling resource putting in a Peer-to-Peer (P2P) network, wherein the P2P network comprises credible peers, the method comprising:
getting authority information and/or reputation information of a client from the P2P network; and
controlling activities of resource putting performed by the client according to the authority information and/or the reputation information.

2. The method according to claim 1, wherein before the controlling the activities of resource putting performed by the client according to the authority information and/or the reputation information, the method further comprises a step of controlling the activities of resource putting performed by the client according to a contact address, and the step comprises:
receiving a request message for putting resource information of the client; and
discarding the request message when determining that a contact address of the resource information is not a contact address of the client.

3. The method according to claim 2, further comprising a step of updating the authority information and/or the reputation information of the client according to the discarding of the request message.

4. The method according to claim 3, wherein the updating the authority information and/or the reputation information of the client comprises:
determining that the activities of putting performed by the client are malicious when determining that the contact address of the resource information is not the contact address of the client, decreasing a reputation value of the client, and setting the authority information of the client as disable when the reputation value of the client is lower than a preset threshold.

5. The method according to claim 4, wherein after the setting the authority information of the client concerning the resource putting as disable, the method further comprises:
increasing the reputation value of the client if the client does not perform any activity of malicious putting anymore within preset time, and setting the authority information of the client as enable when the reputation value satisfies a condition of restoring putting authority.

6. The method according to claim 4 or 5, wherein after the setting the authority information of the client concerning the resource putting as disable, the method further comprises:
putting the updated authority information and/or reputation information of the client into the P2P network.

7. A system for controlling resource putting in a Peer-to-Peer (P2P) network, wherein P2P peers forming the P2P network are credible peers, the system comprising:
a client, configured to send a request message for putting resource information to a P2P peer; and
the P2P peer, configured to get authority information and/or reputation information of the client from the P2P network, receive the request message for putting the resource information of the client, and control activities of resource putting performed by the client according to the authority information and/or the reputation information when a contact address of the resource information is a contact address of the client.

8. The system according to claim 7, wherein the P2P peer is further configured to discard the request message of the client when determining that the contact address of the resource information is not the contact address of the client.

9. A Peer-to-Peer (P2P) peer, comprising:
an authority getting unit, configured to get authority information and/or reputation information of a new access client from a P2P network when the client newly accesses the network; and
a control unit, configured to control activities of resource putting performed by the new access client according to the authority information and/or the reputation information.

10. The P2P peer according to claim 9, wherein the control unit comprises:
a receiving sub-unit, configured to receive a request message for putting resource information of the client;
a judgment sub-unit, configured to judge whether a contact address of the resource information put by the client is a contact address of the client; and
a control sub-unit, configured to discard the request message of the client when the judgment sub-unit determines that the contact address of the resource information is not the contact address of the client.

11. The P2P peer according to claim 9, further comprising:
an update unit, configured to update the authority information and/or the reputation information of the client.

12. The P2P peer according to claim 11, wherein the update unit is specifically configured to determine that the activities of putting performed by the client are malicious when determining that the contact address of the resource information is not the contact address of the client, decrease a reputation value of the client, and set the authority information of the client of putting resource information as disable when the reputation value of the client is lower than a preset threshold; and
to increase the reputation value of the client if the client does not perform any activity of malicious putting anymore within preset time, and set the authority information of the client of putting resource information as enable when the reputation value satisfies a condition of restoring putting authority.

13. The P2P peer according to claim 11 or 12, further comprising:
a putting unit, configured to put the authority information and/or the reputation information updated by the update unit into the P2P network.
